# EUROPEAN PATENT SPECIFICATION

(11) **EP 3 647 867 B1**
(45) Date of publication and mention of the grant of the patent: **07.10.2020**
(21) Application number: 19200170.9
(22) Date of filing: 27.09.2019
(51) Int. Cl.: G03B 19/18, G06F 1/16, H02J 7/00

(54) **BATTERY AND CONTROL METHOD THEREFOR**
BATTERIE UND STEUERUNGSVERFAHREN DAFÜR
BATTERIE ET SON PROCÉDÉ DE COMMANDE

(30) Priority: 05.10.2018 JP 2018190503
(43) Date of publication of application: 06.05.2020
(73) Proprietor: IDX Company, Ltd., Kawasaki-shi, Kanagawa 214-0021 (JP)
(72) Inventor: Motoda, Noriaki, Kawasaki-shi, Kanagawa 214-0021 (JP)
(74) Representative: Grünecker Patent- und Rechtsanwälte PartG mbB

(56) References cited:
- US-A1- 2010 165 188
- US-A1- 2010 247 979

## Description

### BACKGROUND OF THE INVENTION

### Technical Field

The present invention relates to a battery detachably attached to an electronic device such as a video camera, and also relates to a control method for the battery.

### Background Art

Among video cameras, there are large-sized video cameras for professional use, which are generally rested on the user's shoulder to perform video recording. A battery for this type of video camera is detachably attached to the rear side of the video camera (i.e. the side opposite to the lens of the video camera). The video camera may be equipped with not only one but a plurality of batteries in order to perform video recording for a long time. When a plurality of batteries are attached to the video camera, batteries are successively stacked in the following manner. A first battery is attached to the rear side of the video camera, and a second battery is attached to the rear side of the first battery. Further, third and subsequent batteries are successively attached in the same way as the above. At this time, the batteries are electrically connected in parallel, thereby allowing the battery capacity to be increased in proportion to the number of batteries connected together, and thus making it possible to use the stacked batteries in a video camera having high electric power consumption and to perform video recording for a long time. US2010165188 and US2010247979 disclose battery stacks for mobile devices to supply continuous power without interruption.

### Citation List

Patent Literature 1: WO 2001/073869

### SUMMARY OF THE INVENTION

However, when video recording is performed using a video camera with a plurality of batteries attached thereto as stated above, electric power of each battery is consumed substantially equally. Accordingly, when it becomes necessary to replace the batteries during video recording, it may be necessary to temporarily turn off the power supply of the video camera. If the power supply of the video camera is turned off temporarily, the subsequent video recording cannot be started immediately because it takes time (e.g. 1 to 2 minutes) for a computer incorporated in the video camera to install data for a program and so forth.

The present invention has been made in view of the above-described circumstances. Accordingly, an object of the present invention is to provide a battery capable of continuously supplying electric power to an electronic device such as a video camera easily without turning off the power supply of the electronic device. Another object of the present invention is to provide a control method for the battery.

The present invention provides a battery detachably attached to an electronic device or a preceding battery attached to the electronic device. The battery includes a first attaching part provided at the front side of the battery, a second attaching part provided at the rear side of the battery, and a control section controlling the relevant battery. The first attaching part is attachable to the electronic device or the preceding battery to transmit and receive electric power and information to and from the electronic device or the preceding battery. The second attaching part is attachable to a subsequent battery to transmit and receive electric power and information to and from the subsequent battery. The control section is configured such that, when detecting that no subsequent battery is attached to the second attaching part, the control section closes a circuit configured to discharge electric power from the relevant battery to the electronic device or the preceding battery attached to the first attaching part, thereby discharging electric power to the electronic device or the preceding battery.

According to the present invention, when a plurality of batteries are coupled to an electronic device, the rearmost one of the batteries coupled to the electronic device is preferentially used to discharge electric power to the electronic device. Consequently, the rearmost battery first runs out of electric power. Therefore, the electronic device can be continuously used easily, without being stopped, simply by replacing only the rearmost battery.

It should be noted that, after the rearmost battery has been detached for the reason that electric power thereof has been used up, for example, the battery immediately preceding the detached battery becomes a rearmost battery, and discharging electric power is started therefrom. If another battery is connected to the second attaching part of the rearmost battery, the another battery becomes a rearmost battery, and discharging electric power is started therefrom.

It should be noted that, if the second attaching part is configured to be an attaching part having a structure common to itself and a battery attaching part for attaching a battery to an electronic device, it is possible to obtain a configuration for transmission and reception of electric power and information between an electronic device and each battery by using only the first attaching part and the second attaching part, without the need to provide special terminals separately.

Further, according to the present invention, the control section is configured as follows. When detecting that a subsequent battery is attached to the second attaching part, the control section opens the circuit configured to discharge electric power from the relevant battery to the electronic device or the preceding battery attached to the first attaching part, thereby stopping discharging electric power from the relevant battery, and closes a circuit leading from the subsequent battery to the electronic device or the preceding battery to enable discharging electric power from the subsequent battery to the electronic device or the preceding battery.

According to the present invention, discharging electric power from the batteries other than the rearmost battery is stopped; therefore, the electric power of the other batteries can be conserved. Thus, the electric power of the rearmost battery is surely first consumed at all times. Therefore, the electronic device can be continuously used easily, without being stopped, simply by replacing only the rearmost battery.

Further, according to the present invention, the control section is configured as follows. When at least one subsequent battery is attached to the second attaching part and when the discharge electric power of the at least one subsequent battery is in excess of a predetermined allowable discharge electric power, the control section closes the circuit configured to discharge electric power from the relevant battery to the electronic device or the preceding battery attached to the first attaching part, thereby discharging electric power to the electronic device or the preceding battery, whereas, when the discharge electric power of the at least one subsequent battery is not in excess of the predetermined allowable discharge electric power, the control section opens the circuit configured to discharge electric power from the relevant battery to the electronic device or the preceding battery attached to the first attaching part, thereby stopping discharging electric power from the relevant battery.

There may be a case where the electric power consumption of an electronic device cannot be compensated for by only a single battery, depending on the use conditions of the electronic device. In such a case, according to the present invention, the rearmost battery and a necessary number of batteries attached preceding the rearmost battery are simultaneously discharged; therefore, the electronic device can be used reliably without being stopped.

Further, according to the present invention, the control section is configured as follows. When the number of preceding batteries attached to the first attaching part is in excess of a predetermined number, the control section opens the circuit leading from the subsequent battery to the preceding battery to stop discharging electric power from the subsequent battery to the preceding battery.

When a number of batteries which exceeds an appropriate number are connected to an electronic device, the control section stops discharging electric power from batteries subsequent to the appropriate number of batteries, thereby preventing supply of electric power to the electronic device from an excessive number of batteries.

In addition, the present invention provides a control method for a battery detachably attached to an electronic device or a preceding battery attached to the electronic device. According to the control method, when it is detected that no subsequent battery is attached to the rear side of the relevant battery, electric power is discharged from the relevant battery to the electronic device or the preceding battery, which has the relevant battery attached thereto. When it is detected that a subsequent battery is attached to the rear side of the relevant battery, discharging electric power from the relevant battery to the electronic device or the preceding battery is stopped, and discharging electric power from the subsequent battery to the electronic device or the preceding battery is enabled.

According to the present invention, when a plurality of batteries are coupled to an electronic device, the rearmost one of the batteries coupled to the electronic device is preferentially used to discharge electric power to the electronic device, and discharging electric power from the batteries other than the rearmost battery is stopped. Consequently, the electric power of the rearmost battery is first consumed, and the electric power of the other batteries can be conserved. Therefore, the electronic device can be used continuously easily, without being stopped, simply by replacing only the rearmost battery.

### Advantages of Invention

According to the present invention, electric power can be continuously supplied to an electronic device such as a video camera easily without turning off the power supply of the electronic device.

Other objects and advantages of the present invention will become apparent from the following detailed description of illustrated embodiments of the invention.

### BRIEF DESCRIPTION OF THE DRAWINGS

Fig. 1 is a perspective view of a battery 1 according to an embodiment of the present invention, showing the external appearance of the battery 1 as seen from the front side thereof.
Fig. 2 is a perspective view of the battery 1, showing the external appearance of the battery 1 as seen from the rear side thereof.
Fig. 3 is a perspective view of the battery 1 when a protection cover 353 is open.
Fig. 4 is a schematic circuit diagram showing a power circuit incorporated in the battery 1.
Fig. 5 is an illustration showing one example of a functional block diagram of a control section 60 incorporated in the battery 1.
Fig. 6 is an illustration showing a method of connecting a plurality of batteries 1 to a video camera 70.
Fig. 7 is an illustration showing the method of connecting a plurality of batteries 1 to the video camera 70.
Fig. 8 is a schematic operation flowchart showing one example of the operation of the control section 60.
Fig. 9 is a schematic operation flowchart showing discharge control (step ST1-6) of a plurality of batteries.

### DETAILED DESCRIPTION OF THE PREFERRED EMBODIMENTS

Embodiments of the present invention will be explained below in detail with reference to the accompanying drawings.

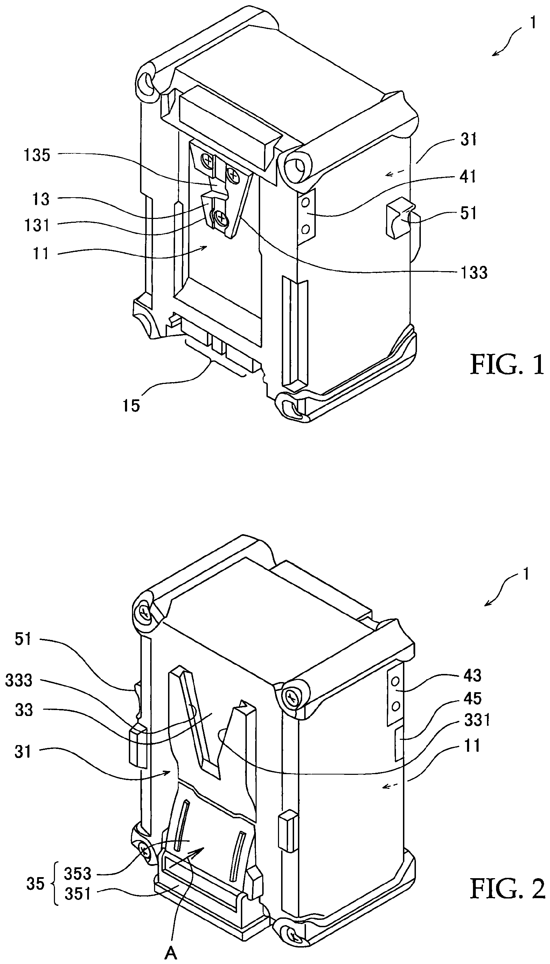

Fig. 1 is a perspective view of a battery 1 according to an embodiment of the present invention, showing the external appearance of the battery 1 as seen from the front side thereof. Fig. 2 is a perspective view of the battery 1, showing the external appearance of the battery 1 as seen from the rear side thereof. It should be noted that the terms "upper" and "lower" as used in the following explanation shall be defined on the basis of the layout of the battery 1 shown in Figs. 1 and 2. Further, the side of the battery 1 that is to be attached to an electronic device (hereinafter referred to as "video camera") 70 (described below) shall be referred to as "the front side", and a side of the battery 1 opposite to the front side shall be referred to as "the rear side". As shown in Figs. 1 and 2, the battery 1 has a substantially quadrangular prism shape. The front side surface of the battery 1 shall be referred to as "the first attaching part 11", and the rear side surface thereof shall be referred to as "the second attaching part 31".

As shown in Fig. 1, the first attaching part 11 has a mounting member 13 secured thereto at an upper central portion of the surface thereof. The mounting member 13 is a plate-shaped member having a substantially V-shaped configuration. The first attaching part 11 further has a connector part 15 provided at a lower end portion thereof. The mounting member 13 has left and right sides defined as engaging sides 131 and 133, respectively. Of the two engaging sides 131 and 133, one engaging side 131 has a lever insertion recess 135 formed near the center thereof. The engaging sides 131 and 133 each have a lower side abutting against the surface of the first attaching part 11, and an upper side separate from the surface of the first attaching part 11. The upper side overhangs more outward than the lower side (in other words, the upper side projects at an acute angle). That is, the engaging sides 131 and 133 are shaped so as to be engageable with V-groove shaped engaging sides 331 and 333 of the below-described second attaching part 31. The connector part 15 has an opening provided in the lower side thereof. The distal ends of a plurality (six in this example) of female-side connecting pins (not shown) are exposed in a row in the opening. The female-side connecting pins line up in a row, which comprise female-side connecting pins for transmitting (charging and discharging) electric power and female-side connecting pins for transmitting and receiving data to and from a computer.

As shown in Fig. 2, the second attaching part 31 has a fitting-receiving portion 33 formed on a central upper portion of the surface thereof. The fitting-receiving portion 33 comprises a substantially V-shaped recess. The second attaching part 31 further has a connector part 35 provided at a central lower portion of the surface thereof. The fitting-receiving portion 33 has left and right sides defined as engaging sides 331 and 333, respectively. The engaging sides 331 and 333 have grooves of V-shaped cross-section formed therein, respectively. These grooves are formed so as to be engageable with the engaging sides 131 and 133 of the first attaching part 11. It should be noted that the engaging side 331 has a lever insertion hole (not shown) formed near the center thereof such that a claw-shaped lever projects from the lever insertion hole toward the engaging side 333 from the engaging side 331 or withdraws into the lever insertion hole. When projecting from the lever insertion hole, the lever is engaged with a lever insertion recess 135 provided in another battery 1. The lever withdraws into the lever insertion hole in response to the pressing of a release button 51 installed on a side surface of the battery 1. The lever is allowed to project from the lever insertion hole by releasing the release button 51 from the pressing force. It should be noted that whether or not the release button 51 is depressed is detected by a detection sensor, and that data concerning the depression of the release button 51 is sent to a control section 60 (described below).

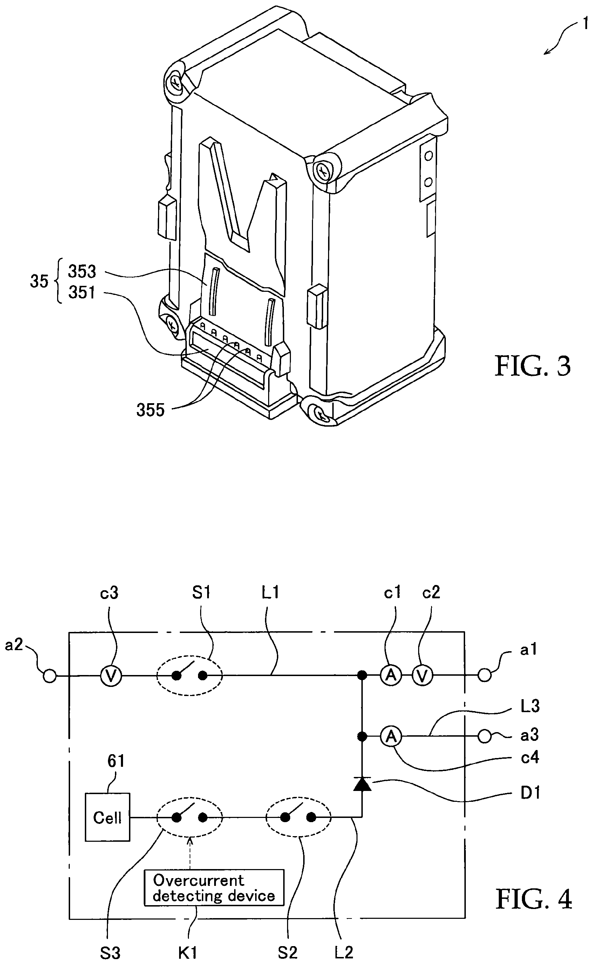

The connector part 35 comprises a connector body portion 351 and a protection cover 353 installed on the top of the connector body portion 351. When the protection cover 353 is pressed from the upper side thereof, i.e. pressed in the direction of the arrow A shown in Fig. 2, the protection cover 353 is opened as shown in Fig. 3. When the protection cover 353 is opened, the upper side of the connector body portion 351 is opened. The upper side of the connector body portion 351 thus opened has an opening formed with dimensions and a shape suitable for insertion of the connector part 15 of another battery 1. The connector body portion 351 has a plurality (six in this example) of male-side connecting pins 355 installed in a row inside the opening in the upper side of the connector body portion 351. It should be noted that, when released from the pressing force, the protection cover 353 is automatically returned to the previous position shown in Fig. 2 by a resilient biasing device (not shown) resiliently biasing the protection cover 353.

For example, two batteries 1 arranged as stated above are prepared, and from above the second attaching part 31 of one of the batteries 1 (hereinafter referred to as "the first battery 1"), the first attaching part 11 of the other battery 1 (hereinafter referred to as "the second battery 1") is slidingly lowered. Consequently, the mounting member 13 of the second battery 1 is inserted and engaged in the fitting-receiving portion 33 of the first battery 1. At the same time, the connector part 15 of the second battery 1 presses the protection cover 353 of the first battery 1, and while pushing open the protection cover 353, the connector part 15 is inserted into the connector body portion 351 of the first battery 1. Thus, the female-side connecting pins of the second battery 1 and the male-side connecting pins 355 of the first battery 1 are connected to each other, respectively.

Further, as shown in Figs. 1 and 2, the battery 1 has two sets of accessory terminal connecting parts 41 and 43 provided on left and right side surfaces thereof, respectively, to take out electric power. In addition, a USB (Universal Serial Bus) connecting part 45 is formed near the accessory terminal connecting part 43. To the accessory terminal connecting parts 41 and 43, for example, a power supply cord for a light may be connected to light up the light by using electric power of the battery 1 (when the battery 1 has other batteries connected to the rear side thereof into a stack, electric power of the rearmost battery in the stack is used in principle, as will be described below). To the USB connecting part 45, a USB device can be connected. In this case, also, electric power is supplied thereto in the same way as the above.

It should be noted that a battery attaching part 71 of the below-described video camera 70 has a structure similar to that of the second attaching part 31 of the battery 1, so that the battery 1 can be attached to the battery attaching part 71.

Fig. 4 is a schematic circuit diagram showing a power circuit incorporated in the battery 1. As shown in the figure, the battery 1 incorporates at least one cell 61 for charging and discharging electric power. The battery 1 further has a power conducting circuit L1 connecting between a terminal a1 connected to the female-side connecting pins of the first attaching part 11 and a terminal a2 connected to the male-side connecting pins 355 of the second attaching part 31. Further, the battery 1 has a power supply circuit L2 connected between the cell 61 and the power conducting circuit L1.

The power conducting circuit L1 has a first switch S1 installed in an intermediate part thereof. The power conducting circuit L1 further has a current sensor c1 and a voltage sensor c2 between the first switch S1 of the power conducting circuit L1 and the terminal a1. Further, a voltage sensor c3 is connected between the first switch S1 of the power conducting circuit L1 and the terminal a2. The power supply circuit L2 has a second switch S2 installed in an intermediate part thereof. Further, a third switch S3 is connected between the second switch S2 of the power supply circuit L2 and the cell 61. The power supply circuit L2 further has a reverse-flow prevention diode D1 connected between the second switch S2 and an accessory circuit L3 (described below). The first switch S1 and the second switch S2 change their on/off state in response to an instruction from the below-described control section 60. The third switch S3 is a switch turned off by a command from an overcurrent detecting device K1 when detecting that electric current discharged from the cell 61 is an overcurrent. Accordingly, the third switch S3 is normally in an on state. It should be noted that output signals from the current sensor c1, the voltage sensor c2 and the voltage sensor c3 and an output signal delivered when the overcurrent detecting device K1 detects an overcurrent are sent to the control section 60. The reverse-flow prevention diode D1 is a diode for preventing a charging current from flowing into the relevant battery 1 from another battery 1 when a plurality of batteries 1 are connected in parallel. It should be noted that when the battery 1 is to be charged from the terminal a1 side by a charger (not shown), the cell 61 can be charged through a circuit (not shown) bypassing (short-circuiting) the reverse-flow prevention diode D1, although this is not shown in the figure.

In addition, the power supply circuit L2 has an accessory circuit L3 connected thereto at a point closer to the power conducting circuit L1 than the second switch S2. The accessory circuit L3 is a circuit supplying electric power from the cell 61 (or a subsequent battery, i.e. rearmost battery in the stack, in principle, when the first switch S1 is on and the second switch S2 is off) to various accessories. That is, the accessory circuit L3 has a terminal a3 which may be any of the above-described accessory terminal connecting parts 41 and 43 and USB connecting part 45. The accessory circuit L3 has a current sensor c4 connected to an intermediate point thereof. An output signal from the current sensor c4 is also sent to the control section 60.

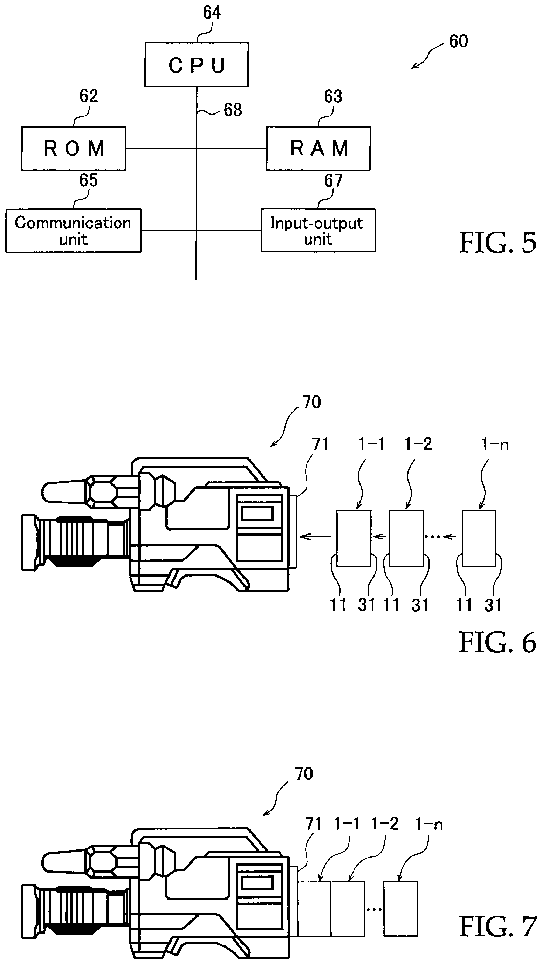

Fig. 5 is an illustration showing one example of a functional block diagram of the control section 60 incorporated in the battery 1. As shown in the figure, the control section 60 has a CPU (Central Processing Unit) 64, a ROM (Read-Only Memory) 62, a RAM (Random-Access Memory) 63, a communication unit 65, and an input-output unit 67. These constituent elements are connected to each other through a communication line 68, e.g. a bus. The CPU 64 controls the operation of the control section 60 by executing a control program stored in the ROM 62. The ROM 62 stores various items of information such as the above-described control program. The RAM 63 temporarily stores various items of information. The communication unit 65 is a communication interface for communication with various external devices which may be connected to the battery 1. The communication unit 65 performs data transmission and reception between itself and the control section 60 of another battery 1 or the control section of the video camera 70 connected to the battery 1 through pins used for data communication among the female-side connecting pins and the male-side connecting pins 355. The input-output unit 67 comprises A/D (Analog-to-Digital) and D/A (Digital-to-Analog) converters, etc., and has functions to output various instruction signals from the control section 60 to the first and second switches S1 and S2 and so forth and to input measurement signals from the current and voltage sensors c1 to c3 and a signal from the release button 51.

Figs. 6 and 7 are attachment explanatory views showing a method of connecting a plurality of batteries 1 of the same structure to the battery attaching part 71 of the video camera 70. As shown in Fig. 6, to attach a plurality of batteries 1 (1-1, 1-2, ···, 1-n) to the video camera 70, first, the first attaching part 11 of a first battery 1-1 is attached to the battery attaching part 71 of the video camera 70. Next, the first attaching part 11 of a second battery 1-2 is attached to the second attaching part 31 of the first battery 1-1. Similarly, third and subsequent batteries 1-3 to 1-n are successively attached in the same way as the above. Consequently, a plurality of batteries 1-1, 1-2, ···, 1-n are attached to the video camera 70, as shown in Fig. 7.

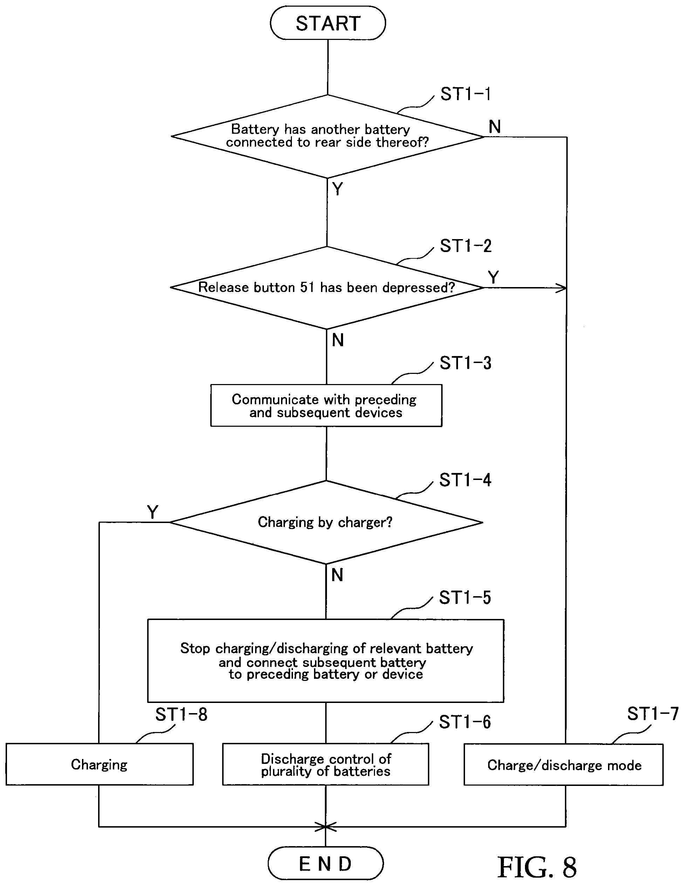

Fig. 8 is a schematic operation flowchart showing one example of the operation of the control section 60 of any one of the batteries 1-1, 1-2, ···, 1-n. It should be noted that when the battery 1 is in a stand-alone state, the first switch S1 shown in Fig. 4 is off, and the second and third switches S2 and S3 shown in Fig. 4 are on, i.e. the battery 1 is in the state of being chargeable and dischargeable by itself.

Referring to Fig. 8, the CPU 64 first judges whether or not the battery 1 has another battery (subsequent battery) 1 connected to the rear side thereof by detecting the output of the voltage sensor c3 (step ST1-1). If it is judged that the battery 1 has no subsequent battery 1 connected thereto ("No" at step ST1-1), the process proceeds to step ST1-7, at which charging/discharging of the battery 1 is enabled (charge/discharge mode). Specifically, with the first switch S1 left off, the second and third switches S2 and S3 are kept in the on state. That is, when detecting that the battery 1 has no subsequent battery attached thereto, the control section 60 closes the circuit configured to discharge electric power from the battery 1 to the video camera 70 or preceding battery attached to the first attaching part 11, thereby discharging electric power to the video camera 70 or the preceding battery. It should be noted that the battery 1 in this state can also be charged by connecting a charger thereto; however, the charging process using a charger is not the gist of the present invention; therefore, an explanation thereof is omitted.

On the other hand, if it is judged at step ST1-1 that the battery 1 has a subsequent battery connected to the rear side thereof ("Yes" at step ST1-1), then it is judged whether the release button 51 of the battery 1 has been depressed (step ST1-2). If it is judged that the release button 51 has been depressed ("Yes" at step ST1-2), the battery 1 is going to be detached and therefore brought into a state when the battery 1 is stand-alone, i.e. the charge/discharge mode in which the second and third switches S2 and S3 are on, with the first switch S1 left off (step ST1-7).

Next, if it is judged at step ST1-2 that the release button 51 has not been depressed, i.e. if the battery 1 is attached to the video camera 70 or a preceding battery, the process proceeds to step ST1-3, at which the battery 1 performs communication with other devices, i.e. a subsequent battery, a preceding battery if attached thereto, and the video camera 70 or the charger (not shown) (step ST1-3). By so doing, it is possible to detect that the battery 1 is attached to the video camera 70, or attached to the charger (not shown), and so forth. It is also possible to detect how many preceding batteries and subsequent batteries are attached to the front and rear sides, respectively, of the battery 1.

If the battery 1 is connected to the charger, the process proceeds from step ST1-4 to step ST1-8, at which the battery 1 is charged. It should be noted that the methods of charging the battery 1 include one in which only the battery 1 is charged alone, and another in which a plurality of attached batteries 1 are charged in a determined order. However, the battery charging method is not the gist of the present invention; therefore, an explanation thereof is omitted.

If it is judged at step ST1-4 that the battery 1 is connected to the video camera 70 directly or indirectly through a preceding battery, the process proceeds from step ST1-4 to step ST1-5, at which the second switch S2 is turned off to stop the battery 1's own charge/discharge operation, and at the same time, the first switch S1 is turned on to enable electric power to be discharged from a subsequent battery attached to the rear side of the battery 1 to a preceding battery attached to the front side of the battery 1 or to the video camera 70 attached to the front side of the battery 1.

As has been explained above using Fig. 8, the control section 60 is configured such that if it is detected that the battery 1 has a subsequent battery attached thereto ("Yes" at step ST1-1), the control section 60 opens the circuit (power supply circuit L2) configured to discharge electric power from the battery 1 to the video camera 70 or a preceding battery attached to the first attaching part 11 of the battery 1 (i.e. turns off the second switch S2), thereby stopping discharging electric power from the battery 1, and closes the circuit (power conducting circuit L1) leading from the subsequent battery to the video camera 70 or the preceding battery (i.e. turns on the first switch S1) to enable discharging electric power from the subsequent battery to the video camera 70 or the preceding battery. With this configuration, discharging electric power from the batteries 1 other than the rearmost one of batteries attached into a stack is stopped; therefore, the electric power of the other batteries 1 can be conserved. Thus, the electric power of the rearmost battery 1 is certainly first consumed at all times. Therefore, the video camera 70 can be continuously used easily, without being stopped, simply by replacing only the rearmost battery 1. At this time, the accessory circuit L3 is also supplied with electric power from the rearmost battery. Accordingly, accessory devices connected to the accessory terminals a3 of any preceding batteries 1 can be supplied with electric power from the rearmost battery. It is therefore possible to replace the rearmost battery without stopping the accessory devices.

As has been explained above, the video camera 70 is supplied with electric power discharged from the rearmost one of batteries 1 attached into a stack, in principle. However, when the required discharge electric power cannot be obtained from only the relevant battery 1, a control process is executed at step ST 1-6 to additionally discharge electric power from another battery preceding the battery 1 in parallel.

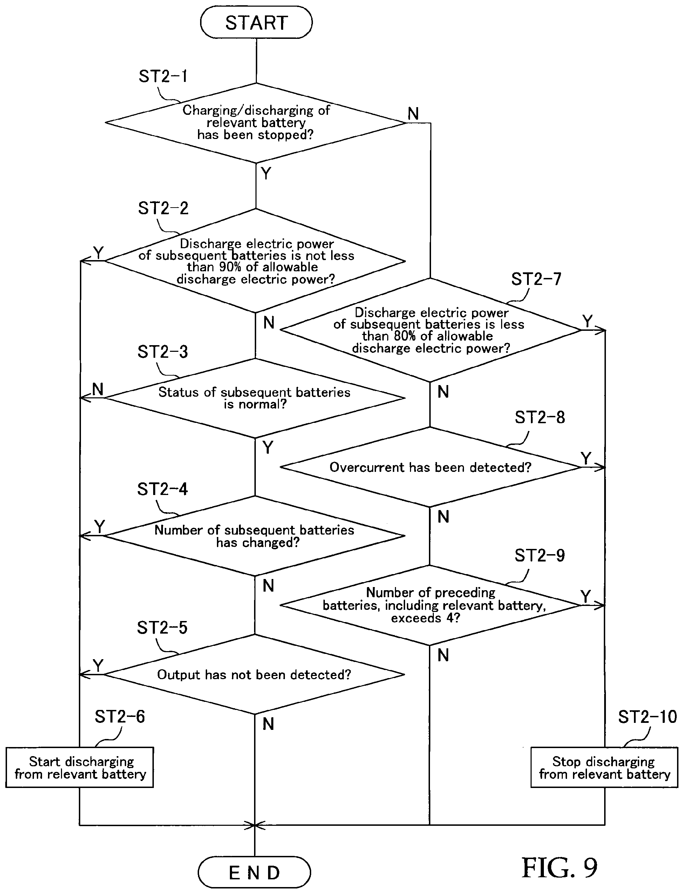

Fig. 9 is a schematic operation flowchart showing the discharge control of a plurality of batteries at step ST1-6. Referring to Fig. 9, the CPU 64 first judges whether or not the battery 1 has been disabled from performing its own discharge operation, i.e. whether or not the second switch S2 is on (step ST2-1). At this time, the second switch S2 has been turned off at the above-described step ST1-5; therefore, "Yes" is the answer at step ST2-1, and the process proceeds to step ST2-2.

Next, at step ST2-2, the CPU 64 judges, during outputting to the video camera 70, whether or not the discharge electric power of the subsequent batteries (all the batteries connected to the rear side of the battery 1) is not less than 90% of the allowable discharge electric power, i.e. whether or not the discharge capacity of the subsequent batteries is in excess of a predetermined limit. If it is judged that the predetermined limit is exceeded, there is a possibility that discharging electric power to the video camera 70 may be stopped. Therefore, the process proceeds to step ST2-6, at which discharging of the relevant battery 1 is started in order to surely keep discharging electric power to the video camera 70. More specifically, the second switch S2 of the relevant battery 1 is turned on to start discharging electric power from the battery 1 in addition to the subsequent batteries. That is, when the required discharge capacity cannot be obtained by only the subsequent batteries, the relevant battery 1 also starts discharging electric power.

On the other hand, if, at step ST2-2, it is judged, during outputting to the video camera 70, that the discharge electric power of the subsequent batteries is not in excess of the predetermined limit (less than 90%), the process proceeds to step ST2-3. Next, at step ST2-3, the CPU 64 judges, during outputting to the video camera 70, whether or not the status of the subsequent batteries is normal (e.g. whether or not any of the subsequent batteries has stopped discharging for some reason). If the status of any of the subsequent batteries is not normal, there is a possibility that discharging electric power to the video camera 70 may be stopped. Therefore, the process proceeds to step ST2-6, at which discharging electric power from the relevant battery 1 is started in order to surely keep discharging electric power to the video camera 70.

Next, if, at step ST2-3, it is judged, during outputting to the video camera 70, that the status of the subsequent batteries is normal, the process proceeds to step ST2-4, at which the CPU 64 judges whether or not the number of subsequent batteries connected to the rear side of the battery 1 has changed. If the number of subsequent batteries connected has changed, there is a possibility that discharging electric power to the video camera 70 may be stopped. Therefore, discharging of the relevant battery 1 is started in order to surely keep discharging to the video camera 70.

Next, if it is judged at step ST2-4 that the number of subsequent batteries connected to the rear side of the battery 1 has not changed, the process proceeds to step ST2-5, at which the CPU 64 judges whether or not the output has not been detected, i.e. whether or not discharging electric power to the video camera 70 has been stopped (e.g. whether or not the video camera 70 has been temporarily turned off). If it is judged that discharging electric power to the video camera 70 has been stopped, the process proceeds to step ST2-6, at which the second switch S2 of the battery 1 is turned on to enable discharging electric power from the battery 1 to the video camera 70, in order to allow electric power to be surely supplied to the video camera 70 when discharging electric power to the video camera 70 is started subsequently.

On the other hand, if it is judged at the above-described step ST2-1 that charging/discharging of the battery 1 is being performed, i.e. if the second switch S2 has been turned on at the above-described step ST2-6, for example, the process proceeds to step ST2-7.

At step ST2-7, the CPU 64 judges, during outputting to the video camera 70, whether or not the discharge electric power of the subsequent batteries (all the batteries connected to the rear side of the battery 1) is less than 80% of the allowable discharge electric power, i.e. whether or not there is a margin in the discharge capacity of the subsequent batteries. If the CPU 64 judges that there is a margin in the discharge capacity of the subsequent batteries, it is unnecessary to discharge electric power from the battery 1. Therefore, the process proceeds to step ST2-10, at which discharging electric power from the battery 1 is stopped. That is, the second switch S2 of the battery 1 is turned off to stop discharging electric power from the battery 1.

Next, if, at step ST2-7, the CPU 64 judges, during outputting to the video camera 70, that the discharge electric power of the subsequent batteries (all the batteries connected to the rear side of the battery 1) is not less than 80% of the allowable discharge electric power, i.e. that there is no margin in the discharge capacity of the subsequent batteries, the process proceeds to step ST2-8, with the discharge state of the battery 1 kept as it is. If, at step ST2-8, the overcurrent detecting device K1 detects, during outputting to the video camera 70, that the electric current discharged from the cell 61 is an overcurrent, a signal indicating the overcurrent condition is sent to the control section 60. On such an occasion, the battery 1 is in a dangerous condition; therefore, the process proceeds to step ST2-10, at which discharging electric power from the battery 1 is stopped. That is, the second switch S2 of the battery 1 is turned off. It should be noted that, at this time, a signal is also sent from the overcurrent detecting device K1 to the third switch S3 to turn off the third switch S3. Thus, the third switch S3 is also turned off.

On the other hand, if, at step ST2-8, it is judged, during outputting to the video camera 70, that the electric current discharged from the cell 61 is not an overcurrent, the process proceeds to step ST2-9. It is detected at step ST2-9 whether or not the number of preceding batteries, including the relevant battery 1, exceeds 4. If the number of preceding batteries exceeds 4, i.e. if the relevant battery 1 is the fifth or subsequent battery, the process proceeds to step ST2-10, at which discharging electric power from the relevant battery 1 is stopped, in order to avoid a risk due to the simultaneous discharging electric power from a number of batteries 1 exceeding an appropriate number. In other words, when 5 or more batteries 1 are attached to the video camera 70, only 4 preceding batteries at the most are allowed to operate, and the fifth and subsequent batteries are disabled from operating from safety point of view. If the number of batteries 1 is not in excess of 4, "No" is the answer at step ST2-9, and the relevant battery 1 maintains its own discharging.

As has been explained above using Fig. 9, the control section 60 is configured to discharge electric power from the relevant battery 1 in addition to the subsequent batteries, in order to surely keep discharging electric power to the video camera 70, on the following occasions: when the discharge electric power from the subsequent batteries is in excess of a predetermined limit ("Yes" at step ST2-2); when an abnormality has occurred in the subsequent batteries ("No" at step ST2-3); when the number of subsequent batteries connected has changed ("Yes" at step ST2-4); and when the output to the video camera 70 has stopped ("Yes" at step ST2-5).

On the other hand, the control section 60 is configured to stop discharging from the relevant battery 1 in order to surely keep discharging electric power to the video camera 70 in an appropriate state or to increase safety on the following occasions: when there is a margin in the discharge capacity of the subsequent batteries ("Yes" at step ST2-7); when an abnormality has occurred in the relevant battery 1 ("Yes" at step ST2-8); and when the number of batteries 1 discharging is in excess of a predetermined number ("Yes" at step ST2-9).

Further, the control section 60 is configured as follows. When one or plurality of subsequent batteries are connected to the second attaching part 31, and when the discharge electric power of the one or plurality of subsequent batteries is in excess of a predetermined allowable discharge electric power, the control section 60 closes the circuit (power supply circuit L2) configured to discharge electric power from the relevant battery 1 to the video camera 70 or a preceding battery attached to the first attaching part 11, thereby discharging electric power from the battery 1 to the video camera 70 or the preceding battery. On the other hand, when the discharge electric power of the one or plurality of subsequent batteries is not in excess of the predetermined allowable discharge electric power, the control section 60 opens the circuit (power supply circuit L2) configured to discharge electric power from the relevant battery 1 to the video camera 70 or a preceding battery attached to the first attaching part 11, thereby stopping discharging electric power from the battery 1. There may be a case where the electric power consumption of the video camera 70 cannot be compensated for only by a single battery 1, depending on the use conditions of the video camera 70. In such a case, according to the present invention, the rearmost battery 1 and a necessary number of batteries 1 attached preceding the rearmost battery 1 are simultaneously discharged; therefore, the video camera 70 can be used reliably without being stopped.

The control section 60 is configured such that when the number of preceding batteries attached to the first attaching part 11 is in excess of a predetermined number (e.g. 4), the control section 60 opens the circuit (power conducting circuit L1) leading from a subsequent battery attached to the second attaching part 31 to the preceding battery, thereby stopping discharging electric power from the subsequent battery to the preceding battery. That is, when a number (e.g. 5 or more) of batteries 1 which exceeds an appropriate number are connected to the video camera 70, the control section 60 stops discharging electric power from batteries subsequent to the appropriate number, thereby preventing supply of electric power to the video camera 70 from an excessive number of batteries.

Although an embodiment of the present invention has been described above, the present invention is not limited to the foregoing embodiment but can be modified in a variety of ways without departing from the scope of the technical idea set forth in the appended claims and described in the specification and the accompanying drawings. It should be noted that any shape, structure or configuration that offers the operation/working-effect of the invention in this application is within the scope of the technical idea of the invention in this application even if it is not directly mentioned in the specification or the drawings. For example, in the foregoing embodiment, a video camera is used as an electronic device to which a battery according to the present invention is attached. However, the present invention is also applicable to batteries attached to various electronic devices other than video cameras. In addition, the contents described above and shown in the drawings, even a part of them, can be respectively independent embodiments, and the embodiment of the present invention is not limited to one embodiment as a combination of the above description and the drawings.

### Reference Signs List

- 1 (1-1, 1-2, ···, 1-n):: battery
- 11:: first attaching part
- 31:: second attaching part
- 60:: control section
- 61:: cell
- 70:: video camera
- 71:: battery attaching part
- L1:: power conducting circuit
- L2:: power supply circuit
- L3:: accessory circuit
- S1:: first switch
- S2:: second switch
- S3:: third switch
- K1:: overcurrent detecting device

## Claims

1. A battery (1) detachably attached to one of an electronic device (70) and a preceding battery (1) attached to the electronic device (70), the battery (1) comprising:
a first attaching part (11) provided at a front side of the battery (1);
a second attaching part (31) provided at a rear side of the battery (1); and
a control section (60) controlling the battery (1);
the first attaching part (11) being attachable to one of the electronic device (70) and the preceding battery (1) to transmit and receive electric power and information to and from the one of the electronic device (70) and the preceding battery (1);
the second attaching part (31) being attachable to a subsequent battery (1) to transmit and receive electric power and information to and from the subsequent battery (1); and
the control section (60) being configured such that, when detecting that no subsequent battery (1) is attached to the second attaching part (31), the control section (60) closes a circuit (L2) configured to discharge electric power from the relevant battery (1) to the one of the electronic device (70) and the preceding battery attached to the first attaching part (11), thereby discharging electric power to the one of the electronic device (70) and the preceding battery (1).

2. The battery (1) of claim 1, wherein, when detecting that a subsequent battery (1) is attached to the second attaching part (31), the control section (60) opens the circuit (L2) configured to discharge electric power from the relevant battery (1) to the one of the electronic device (70) and the preceding battery (1) attached to the first attaching part (11), thereby stopping discharging electric power from the relevant battery (1), and closes a circuit (L1) leading from the subsequent battery (1) to the one of the electronic device (70) and the preceding battery (1) to enable discharging electric power from the subsequent battery (1) to the one of the electronic device (70) and the preceding battery (1).

3. The battery (1) of one of claims 1 and 2, wherein, when at least one subsequent battery (1) is attached to the second attaching part (31) and when discharge electric power of the at least one subsequent battery (1) is in excess of a predetermined allowable discharge electric power, the control section (60) closes the circuit (L2) configured to discharge electric power from the relevant battery (1) to the one of the electronic device (70) and the preceding battery (1) attached to the first attaching part (11), thereby discharging electric power to the one of the electronic device (70) and the preceding battery (1), whereas, when the discharge electric power of the at least one subsequent battery (1) is not in excess of the predetermined allowable discharge electric power, the control section (60) opens the circuit (L2) configured to discharge electric power from the relevant battery (1) to the one of the electronic device (70) and the preceding battery (1) attached to the first attaching part (11), thereby stopping discharging electric power from the relevant battery (1).

4. The battery (1) of any one of claims 1, 2 and 3, wherein, when a number of the preceding batteries (1) attached to the first attaching part (11) is in excess of a predetermined number, the control section (60) opens the circuit (L1) leading from the subsequent battery (1) to the preceding battery (1) to stop discharging electric power from the subsequent battery (1) to the preceding battery (1).

5. A control method for a battery (1) detachably attached to one of an electronic device (70) and a preceding battery (1) attached to the electronic device (70), the control method comprising:
discharging, when detecting that no subsequent battery (1) is attached to a rear side of the relevant battery (1), electric power from the relevant battery (1) to the one of the electronic device (70) and the preceding battery (1), which has the relevant battery (1) attached thereto; and
stopping, when detecting that a subsequent battery (1) is attached to the rear side of the relevant battery (1), discharging electric power from the relevant battery (1) to the one of the electronic device (70) and the preceding battery (1), and enabling discharging electric power from the subsequent battery (1) to the one of the electronic device (70) and the preceding battery (1).

## Patentansprüche

1. Batterie (1), die abnehmbar an einer elektronischen Vorrichtung (70) oder einer an der elektronischen Vorrichtung (70) angebrachten vorangehenden Batterie (1) angebracht ist, wobei die Batterie (1) umfasst:
ein erstes Anbringungsteil (11), das an einer Vorderseite der Batterie (1) vorhanden ist;
ein zweites Anbringungsteil (31), das an einer Rückseite der Batterie (1) vorhanden ist; sowie
einen Steuerungsabschnitt (60), der die Batterie (1) steuert;
wobei das erste Anbringungsteil (11) an der elektronischen Vorrichtung (70) oder der vorangehenden Batterie (1) angebracht werden kann, um elektrische Energie und Informationen zu und von der elektronischen Vorrichtung (70) oder der vorangehenden Batterie (1) zu senden und zu empfangen;
das zweite Anbringungsteil (31) an einer nachfolgenden Batterie (1) angebracht werden kann, um elektrische Energie und Informationen zu und von der nachfolgenden Batterie (1) zu senden und zu empfangen; und
der Steuerungsabschnitt (60) so ausgeführt ist, dass, wenn erfasst wird, dass keine nachfolgende Batterie (1) an dem zweiten Anbringungsteil (31) angebracht ist, der Steuerungsabschnitt (60) einen Stromkreis (L2) schließt, der so ausgeführt ist, dass er elektrische Energie von der betreffenden Batterie (1) zu der elektronischen Vorrichtung (70) oder der an dem ersten Anbringungsteil (11) angebrachten vorangehenden Batterie entlädt, wodurch elektrische Energie zu der elektronischen Vorrichtung (70) oder der vorangehenden Batterie (1) entladen wird.

2. Batterie (1) nach Anspruch 1, wobei, wenn erfasst wird, dass eine nachfolgende Batterie (1) an dem zweiten Anbringungsteil (31) angebracht ist, der Steuerungsabschnitt (60) den Stromkreis (L2) öffnet, der so ausgeführt ist, dass er elektrische Energie von der betreffenden Batterie (1) zu demjenigen Element von der elektronischen Vorrichtung (70) und der vorangehenden Batterie (1) entlädt, das an dem ersten Anbringungsteil (11) angebracht ist, wodurch Entladen elektrischer Energie von der betreffenden Batterie (1) unterbrochen wird, und einen Stromkreis (L1) schließt, der von der nachfolgenden Batterie (1) zu der elektronischen Vorrichtung (70) oder der vorangehenden Batterie (1) führt, um Entladen elektrischer Energie von der nachfolgenden Batterie (1) zu der elektronischen Vorrichtung (70) oder der vorangehenden Batterie (1) zu ermöglichen.

3. Batterie (1) nach einem der Ansprüche 1 und 2, wobei, wenn wenigstens eine nachfolgende Batterie (1) an dem zweiten Anbringungsteil (31) angebracht ist und wenn entladene elektrische Energie der wenigstens einen nachfolgenden Batterie (1) eine vorgegebene zulässige entladene elektrische Energie übersteigt, der Steuerungsabschnitt (60) den Stromkreis (L2) schließt, der so ausgeführt ist, dass er elektrische Energie von der betreffenden Batterie (1) zu der elektronischen Vorrichtung (70) oder der vorangehenden Batterie (1) entlädt, die an dem ersten Anbringungsteil (11) angebracht ist, wodurch elektrische Energie zu der elektronischen Vorrichtung (70) oder der vorangehenden Batterie (1) entladen wird, während, wenn die entladene elektrische Energie der wenigstens einen nachfolgenden Batterie (1) die vorgegebene zulässige entladene elektrische Energie nicht übersteigt, der Steuerungsabschnitt (60) den Stromkreis (L2) öffnet, der so ausgeführt ist, dass er elektrische Energie von der betreffenden Batterie (1) zu der elektronischen Vorrichtung (70) oder der vorangehenden Batterie (1) entlädt, die an dem ersten Anbringungsteil (11) angebracht ist, wodurch Entladen elektrischer Energie von der betreffenden Batterie (1) unterbrochen wird.

4. Batterie (1) nach einem der Ansprüche 1, 2 und 3, wobei, wenn eine Anzahl der vorangehenden Batterien (1), die an dem ersten Anbringungsteil (11) angebracht sind, eine vorgegebene Anzahl übersteigt, der Steuerungsabschnitt (60) den Stromkreis (L1) öffnet, der von der nachfolgenden Batterie (1) zu der vorangehenden Batterie (1) führt , um Entladen elektrischer Energie von der nachfolgenden Batterie (1) zu der vorangehenden Batterie (1) zu unterbrechen.

5. Steuerungsverfahren für eine Batterie (1), die abnehmbar an einer elektronischen Vorrichtung (70) oder einer an der elektronischen Vorrichtung (70) angebrachten vorangehenden Batterie (1) angebracht ist, wobei das Steuerungsverfahren umfasst:
Entladen elektrischer Energie von der betreffenden Batterie (1) zu der elektronischen Vorrichtung (70) oder der vorangehenden Batterie (1), an der die betreffende Batterie (1) angebracht ist, wenn festgestellt wird, dass keine nachfolgende Batterie (1) an einer Rückseite der betreffenden Batterie (1) angebracht ist; und
Unterbrechen von Entladen elektrischer Energie von der betreffenden Batterie (1) zu der elektronischen Vorrichtung (70) oder der vorangehenden Batterie (1) und Ermöglichen von Entladen elektrischer Energie von der nachfolgenden Batterie (1) zu der elektronischen Vorrichtung (70) oder der vorangehenden Batterie (1), wenn festgestellt wird, dass eine nachfolgende Batterie (1) an der Rückseite der betreffenden Batterie (1) angebracht ist.

## Revendications

1. Batterie (1) fixée de manière amovible à l'un d'un dispositif électronique (70) et d'une batterie précédente (1) fixée au dispositif électronique (70), la batterie (1) comprenant :
une première partie de fixation (11) prévue sur un côté avant de la batterie (1) ;
une seconde partie de fixation (31) prévue sur un côté arrière de la batterie (1) ; et
une section de commande (60) commandant la batterie (1) ;
la première partie de fixation (11) pouvant être fixée à un certain du dispositif électronique (70) ou de la batterie précédente (1) pour transmettre et recevoir de la puissance électrique et des informations vers et depuis le dispositif électronique (70) ou la batterie précédente (1) ;
la seconde partie de fixation (31) pouvant être fixée à une batterie suivante (1) pour transmettre et recevoir de la puissance électrique et des informations vers et depuis la batterie suivante (1) ; et
la section de commande (60) étant configurée de telle sorte que, lorsqu'il est détecté qu'aucune batterie suivante (1) n'est fixée à la seconde partie de fixation (31), la section de commande (60) ferme un circuit (L2) configuré pour décharger de la puissance électrique de la batterie concernée (1) vers le certain du dispositif électronique (70) et de la batterie précédente fixé à la première partie de fixation (11), en déchargeant ainsi de la puissance électrique vers le certain du dispositif électronique (70) et de la batterie précédente (1).

2. Batterie (1) selon la revendication 1, dans laquelle, lorsqu'il est détecté qu'une batterie suivante (1) est fixée à la seconde partie de fixation (31), la section de commande (60) ouvre le circuit (L2) configuré pour décharger de la puissance électrique depuis la batterie concernée (1) vers le certain du dispositif électronique (70) et de la batterie précédente (1) fixé à la première partie de fixation (11), en arrêtant ainsi de décharger de la puissance électrique depuis la batterie concernée (1), et ferme un circuit (L1) menant de la batterie suivante (1) au certain du dispositif électronique (70) et de la batterie précédente (1) pour permettre de décharger de la puissance électrique de la batterie suivante (1) vers le certain du dispositif électronique (70) et la batterie précédente (1).

3. Batterie (1) selon l'une des revendications 1 et 2, dans laquelle, lorsqu'au moins une batterie suivante (1) est fixée à la seconde partie de fixation (31) et lorsqu'une décharge de puissance électrique depuis au moins une batterie suivante (1) dépasse une puissance électrique de décharge admissible prédéterminée, la section de commande (60) ferme le circuit (L2) configuré pour décharger de la puissance électrique de la batterie concernée (1) vers le certain du dispositif électronique (70) et de la batterie précédente (1) fixé à la première partie de fixation (11), en déchargeant ainsi de la puissance électrique vers le certain du dispositif électronique (70) et de la batterie précédente (1), tandis que lorsque la puissance électrique de décharge de la au moins une batterie suivante (1) ne dépasse pas la puissance électrique de décharge admissible prédéterminée, la section de commande (60) ouvre le circuit (L2) configuré pour décharger de la puissance électrique de la batterie concernée (1) vers le certain du dispositif électronique (70) et de la batterie précédente (1) fixé à la première partie de fixation (11), en arrêtant ainsi une décharge de puissance électrique depuis la batterie concernée (1).

4. Batterie (1) selon l'une quelconque des revendications 1, 2 et 3, dans laquelle, lorsqu'un nombre des batteries précédentes (1) fixées à la première partie de fixation (11) dépasse un nombre prédéterminé, la section de commande (60) ouvre le circuit (L1) menant de la batterie suivante (1) à la batterie précédente (1) pour arrêter de décharger de la puissance électrique de la batterie suivante (1) à la batterie précédente (1).

5. Procédé de commande pour une batterie (1) fixée de manière amovible à un certain parmi un dispositif électronique (70) et une batterie précédente (1) fixée au dispositif électronique (70), le procédé de commande comprenant les étapes consistant à :
décharger, lorsqu'il est détecté qu'aucune batterie suivante (1) n'est fixée à une face arrière de la batterie concernée (1), de la puissance électrique de la batterie concernée (1) vers le certain du dispositif électronique (70) et de la batterie précédente (1), ayant la batterie correspondante (1) fixée dessus ; et
arrêter, lorsqu'il est détecté qu'une batterie suivante (1) est fixée à la face arrière de la batterie concernée (1), de décharger de la puissance électrique de la batterie concernée (1) vers le certain du dispositif électronique (70) et de la batterie précédente (1), et permettre de décharger de la puissance électrique de la batterie suivante (1) vers le certain du dispositif électronique (70) et de la batterie précédente (1).
